# EUROPÄISCHE PATENTSCHRIFT

(11) **EP 2 057 037 B1**
(45) Veröffentlichungstag und Bekanntmachung des Hinweises auf die Patenterteilung: **10.02.2010**
(21) Anmeldenummer: 07786190.4
(22) Anmeldetag: 19.07.2007
(51) Int. Cl.: B60R 13/04

(54) **VORRICHTUNG ZUM HALTEN EINER LEISTE IN EINEM KANAL**
DEVICE FOR RETAINING A STRIP IN A CHANNEL
DISPOSITIF DE RETENUE D'UNE BAGUETTE DANS UN CANAL

(30) Priorität: 23.08.2006 DE 102006039577
(43) Veröffentlichungstag der Anmeldung: 13.05.2009
(73) Patentinhaber: A. Raymond et Cie., 38000 Grenoble (FR)
(72) Erfinder: REGENSBURGER, Jan, 79400 Kandern (DE); TREMMEL, Günter, 79739 Schwörstadt (DE)
(74) Vertreter: Rüttgers, Joachim
(86) Internationale Anmeldenummer: PCT/EP2007/006420
(87) Internationale Veröffentlichungsnummer: WO 2008/022679

(56) Entgegenhaltungen:
- EP-A- 1 319 578
- DE-A1- 19 947 765
- DE-A1-102005 042 244
- DE-U1- 29 602 223

## Beschreibung

Die Erfindung betrifft eine Vorrichtung zum Halten einer Leiste in einem Kanal, insbesondere einer Dachleiste in einem Dachkanal eines Kraftfahrzeugs, gemäß dem Oberbegriff des Patentanspruches 1.

Eine derartige Vorrichtung ist aus DE 10 2005 042 244 A1 bekannt. Die vorbekannte Vorrichtung verfügt über ein Fußteil, das mit einer in Gestalt von Blechstreifen und Schrauben ausgebildeten Haltestruktur zum Verbinden mit einer an dem Dachkanal ausgebildeten Eingriffsstruktur eingerichtet ist. Weiterhin ist ein Kopfteil in Gestalt einer flachen Schiene vorhanden, das mit Eingriffselementen in Gestalt von schräg nach außen abstehenden, federnden Spannarmen sowie Formnasen zum Eingriff mit an der Dachleiste ausgebildeten Randrinnen ausgestattet ist. Das Fußteil und das Kopfteil sind über formschlüssige und kraftschlüssige Verbindungen starr zueinander angeordnet.

Der Erfindung liegt die Aufgabe zugrunde, eine Vorrichtung der eingangs genannten Art anzugeben, mit der insbesondere bei einem Kraftfahrzeug eine Leiste auch bei verhältnismäßig großen Toleranzen bei den Abmessungen eines Kanals sowie der Leiste eine einfache und betriebssichere Verbindung zwischen einer Leiste und dem Kanal bewerkstelligbar ist.

Diese Aufgabe wird bei einer Vorrichtung der eingangs genannten Art mit den kennzeichnenden Merkmalen des Patentanspruches 1 gelöst.

Dadurch, dass das Fußteil und das Kopfteil über die Verriegelungsanordnung geführt relativ zueinander von der Vormontagestellung in die Endmontagestellung verschiebbar und in der Endmontagestellung über die Verriegelungsanordnung jedenfalls gegenüber einer Bewegung von der Endmontagestellung zurück in die Vormontagestellung blockiert sind, lässt sich die Leiste nach Eingriff mit mehreren erfindungsgemäßen Vorrichtungen in der Vormontagestellung in Bezug auf den Kanal ausrichten, so dass bei der Bewegung der Kopfteile in Bezug auf die Fußteile in die Endmontagestellung eine kontinuierliche Korrektur bei unter Umständen vorhandenen Toleranzen in den Abmessungen der Leiste und/oder des Kanals vorgenommen werden können, bis die Kopfteile mit den Fußteilen verriegeln und blockiert sind.

Weitere zweckmäßige Ausgestaltungen der Erfindung sind Gegenstand der Unteransprüche.

Die Erfindung wird anhand eines bevorzugten Ausführungsbeispieles mit Bezug auf die Figuren der Zeichnung näher erläutert, wobei sich daraus weitere zweckmäßige Ausgestaltungen und Vorteile der Erfindung ergeben. Es zeigen:
- Fig. 1: in einer ersten perspektivischen Ansicht ein aus Kunststoff im Spritzgussverfahren hergestelltes Ausführungsbeispiel der Erfindung mit einem Fußteil und einem Kopfteil unmit- telbar nach dem Durchführen des Spritzgussvorgangs,
- Fig. 2: in einer zweiten perspektivischen Ansicht das Ausfüh- rungsbeispiel gemäß Fig. 1,
- Fig. 3: das Ausführungsbeispiel gemäß Fig. 1 und Fig. 2 im Schnitt in einer Vormontagestellung im Eingriff mit einer Dachleiste und mit einem Dachkanal eines Kraftfahrzeugs,
- Fig. 4: die Anordnung gemäß Fig. 3 nach einer Relativbewegung des Kopfteiles in Richtung des Fußteiles aus der Vormon- tagestellung in Richtung einer Endmontagestellung und
- Fig. 5: die Anordnung gemäß Fig. 3 und Fig. 4 in der Endmonta- gestellung des Kopfteiles in Bezug auf das Fußteil.

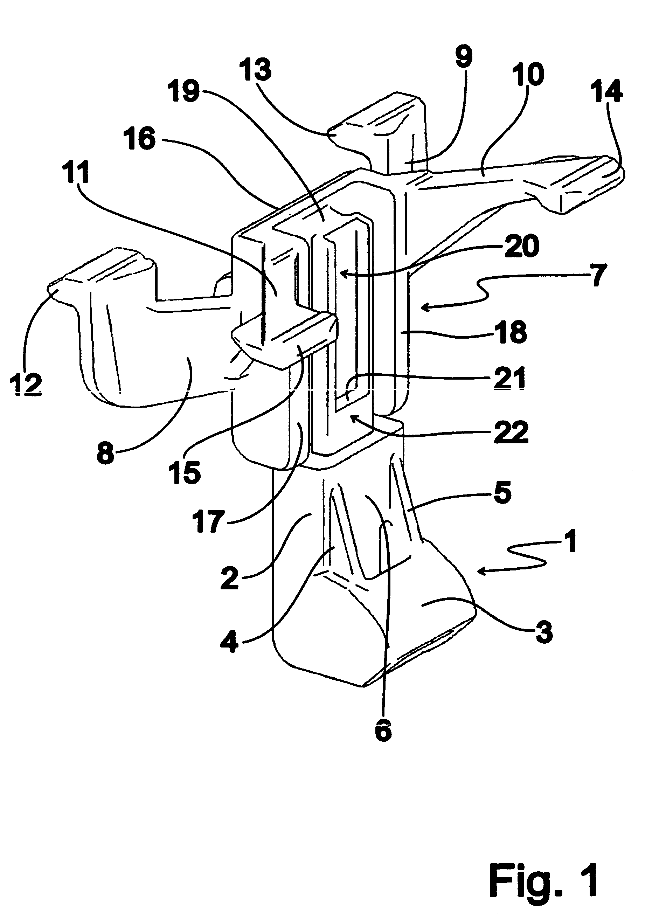

Fig. 1 zeigt in einer ersten perspektivischen Ansicht ein Ausführungsbeispiel einer erfindungsgemäßen Vorrichtung, die aus Kunststoff im Spritzgussverfahren hergestellt ist, in einer Anordnung unmittelbar nach Abschluss des Spritzgussvorgangs, bevor die Spritzgussmaschine geöffnet wird. Das Ausführungsbeispiel gemäß Fig. 1 verfügt über ein Fußteil 1, das mit einem länglichen Führungsschaft 2 mit einem im Wesentlichen rechteckigen Querschnitt ausgebildet ist. An einem Ende verfügt der Führungsschaft 2 als Haltestruktur über einen seitlich vorstehenden Anlagevorsprung 3, der wie weiter unten näher erläutert, zum Eingriff insbesondere mit einem Dachkanal eines Kraftfahrzeugs konturiert ist. Zwischen dem Führungsschaft 2 und dem Anlagevorsprung 3 sind zwei Formstege 4, 5 in Gestalt eines rechtwinkligen Dreiecks ausgebildet, die mit ihren Katheden an einer Rückwand 6 des Führungsschafts 2 angeformt sind, wobei sich die Hypotenusen der Formstege 4, 5 zwischen dem Führungsschaft 2 und dem Anlagevorsprung 3 erstrecken.

Das Ausführungsbeispiel gemäß Fig. 1 verfügt weiterhin über ein längliches Kopfteil 7 mit einem ebenfalls im Wesentlichen rechteckförmigen Querschnitt. An dem Kopfteil 7 sind an den vier Randkanten als Eingriffselemente Spannarme 8, 9, 10, 11 angeformt, die sternförmig nach außen abstehen und an ihren freien Enden Formnasen 12, 13, 14, 15 aufweisen, die, wie weiter untern näher erläutert, an die Konturen von in einer Dachleiste ausgebildeten Randrinnen formschlüssig angepasst sind.

Das Kopfteil 7 verfügt über einen im Wesentlichen U-artigen Grundkörper mit einer Basiswand 16, an deren Randseiten jeweils eine Seitenwand 17, 18 rechtwinklig angesetzt ist. Zwischen den Seitenwänden 17, 18 ist eine T-artig ausgebildete Innenschiene 19 einer Schienenanordnung ausgebildet, die über ihren Schenkel mit der Basiswand 16 in Verbindung steht. Die Innenschiene 19 verfügt an ihrem der Basiswand 16 abgewandten Querstück über eine sich in Längsrichtung erstreckende Längsnut 20, die an einem Ende offen und an einem Ende mit einer Anschlagfläche 21 eines Rastanschlags 22 geschlossen ist.

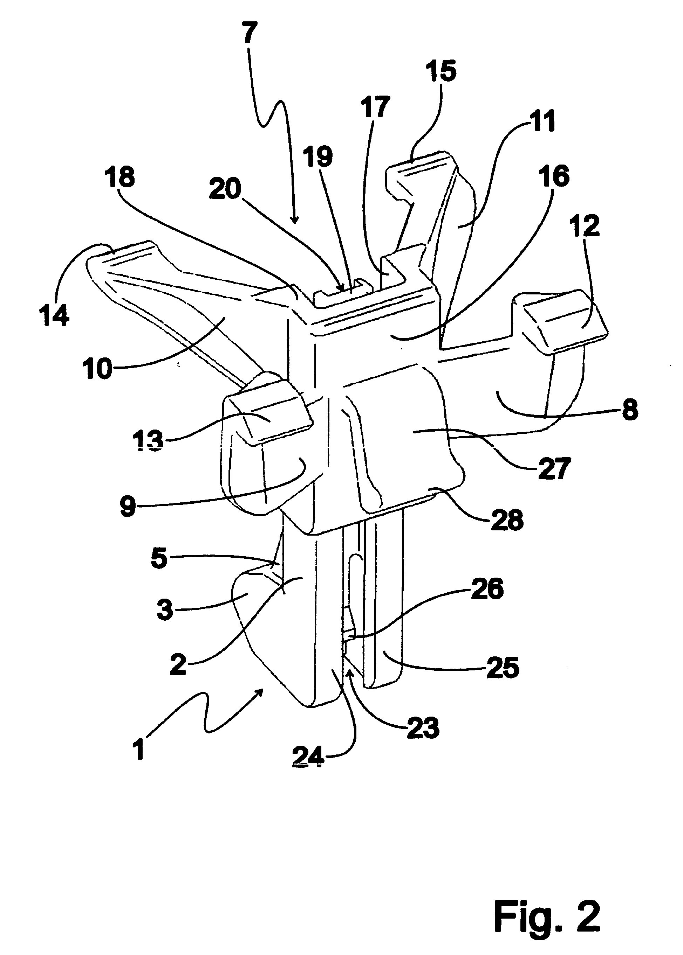

Fig. 2 zeigt in einer zweiten perspektivischen Ansicht das Ausführungsbeispiel gemäß Fig. 1. Aus Fig. 2 ist ersichtlich, dass auf der dem Anlagevorsprung 4 abgewandten Seite des Führungsschaftes 2 das Fußteil 1 über eine komplementär zu der Innenschiene 19 des Kopfteiles 7 ausgebildete Führungsnut 23 als weiteres Element der Schienenanordnung aufweist, die zum Hintergreifen des Querstückes der Innenschiene 19 mit aufeinander zu weisenden Nutwänden 24, 25 ausgebildet ist. Weiterhin lässt sich der Ansicht gemäß Fig. 2 entnehmen, dass das Fußteil 1 über eine Rastnase 26 verfügt, die im Bereich des Anlagevorsprungs 3 angeordnet ist und sich in die Führungsnut 23 erstreckt.

Aus der Darstellung gemäß Fig. 2 ist ersichtlich, dass an der Basiswand 16 des Kopfteiles 7 auf der der Innenschiene 19 gegenüberliegenden Seite eine Andruckzunge 27 angeformt ist, die im Anformbereich in etwa rechtwinklig von der Basiswand 16 absteht, sich von den Formnasen 12, 13, 14, 15 wegweisend in Richtung des Fußteiles 1 erstreckt und an ihrem freien Ende mit einer gegenüber dem übrigen Querschnitt der Andruckzunge 27 verdickten Abschlusswulst 28 ausgebildet ist. Durch diese Ausgestaltung ist die Andruckzunge 27 in Richtung der Basiswand 16 federnd ausgebildet.

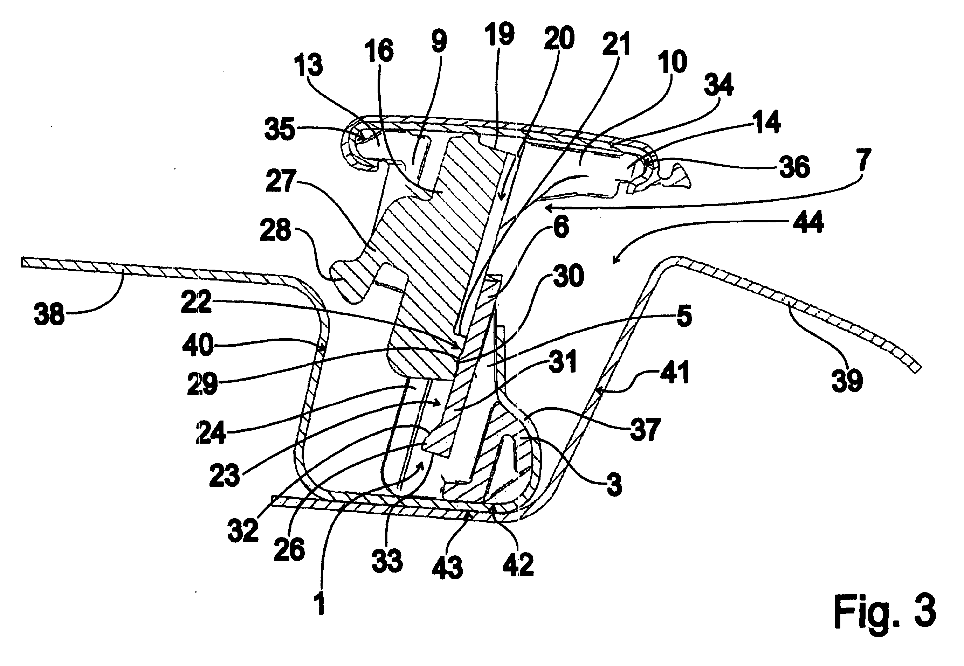

Fig. 3 zeigt im Schnitt das Ausführungsbeispiel gemäß Fig. 1 und Fig. 2 in einer Vormontagestellung, in der gegenüber der Anordnung gemäß Fig. 1 und Fig. 2 nach Ausstoß aus der Spritzgussmaschine das Fußteil 1 und das Kopfteil 7 in Bezug aufeinander soweit angenähert worden sind, dass eine an der Innenschiene 19 ausgebildete Vormontagevertiefung 29 mit einem an dem Fußteil 1 im Bereich der Führungsnut 23 ausgebildeten Vormontagevorsprung 30 in Eingriff ist. Somit ist einer Bewegung des Kopfteiles 7 in Bezug auf das Fußteil 1 aus der Vormontagestellung heraus ein gewisser Widerstand entgegengesetzt. Diese Vormontagestellung entspricht im übrigen dem Auslieferzustand, in dem die Spannarme 8, 9, 10, 11 jeweils einen ersten Abstand von dem Anlagevorsprung 3 aufweisen.

In der Darstellung gemäß Fig. 3 ist ersichtlich, dass die Rastnase 26 federnd an einer Nasenzunge 31 angeformt ist, die von der Rückwand 6 des Fußteiles 1 freigsschnitten ist. Weiterhin lässt sich Fig. 3 entnehmen, dass die Rastnase 26 zum einen auf ihrer dem Anlagefuß 2 abgewandten Seite mit einer Anlaufschräge 32 und auf ihrer der Anlaufschräge 32 abgewandten Seite mit einer rechtwinklig zu der Rückwand 6 ausgerichteten Blockierfläche 33 ausgebildet ist.

In der Darstellung gemäß Fig. 3 sind die an den Spannarmen 8, 9, 10, 11 ausgebildeten Formnasen 12, 13, 14, 15 mit an einer Dachleiste 34 eines Kraftfahrzeugs als Beispiel einer Leiste randseitig ausgebildeten Randrinnen 35, 36 in Eingriff, wobei aufgrund der Flexibilität der Spannarme 8, 9, 10, 11 Toleranzen im Abstand zwischen den Randrinnen 35, 36 ohne weiteres ausgleichbar sind. Das Fußteil 1 wiederum steht mit einem umgebogenen Halterand 37 eines ersten Blechstückes 38 in Eingriff, das zusammen mit einem zweiten Blechstück 39 mit jeweils einem Abstand von dem Halterand 37 angeordneten und parallel zueinander verlaufenden Kanalseitenwänden 40, 41 sowie mit aufeinandergelegten Kanalbodenwänden 42, 43 einen Dachkanal 44 als Beispiel eines Kanals begrenzen. Der Dachkanal 44 weist zwar in Längsrichtung eine im Wesentlichen gleichbleibende Tiefe sowie Breite auf, allerdings kommt es aus fertigungstechnischen Gründen bei diesen Dimensionen zu Abweichungen von den Sollwerten, die auszugleichen sind, damit bei Einfügen der Dachleiste 34 in den Dachkanal 44 ein optisch ansprechendes Aussehen gewährleistet ist.

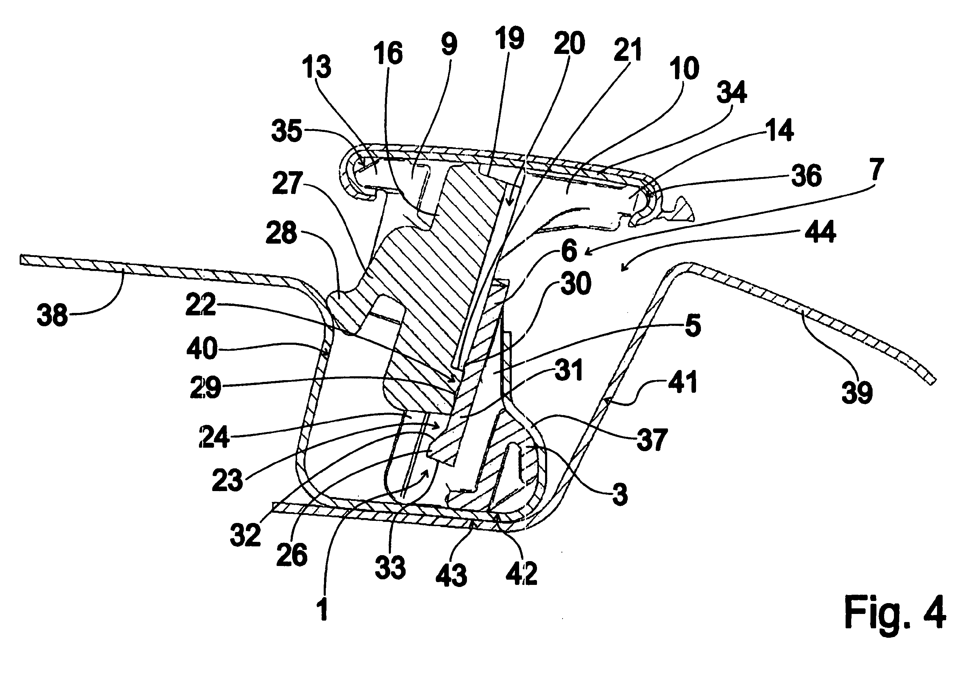

Fig. 4 zeigt die Anordnung gemäß Fig. 3 nach Bewegen des Kopfteiles 7 in Bezug auf das Fußteil 1 aus der Vormontagestellung heraus in Richtung einer Annäherung der Dachleiste 36 zu dem Dachkanal 46. Aus Fig. 4 ist ersichtlich, dass ab einer bestimmten Annäherung der Dachleiste 34 zu dem Dachkanal 44 die Abschlusswulst 28 der Andruckzunge 27 mit der ihr zugewandten Kanalseitenwand 40 des betreffenden Blechstückes 38 in Kontakt kommt, so dass bei einem Fortsetzen dieser Bewegung die Andruckzunge 27 einfedert und das Fußteil 1 mit dem Anlagevorsprung 3 sowie den Formstegen 4, 5 genen den Halterand 37 drückt. Dadurch ist ein sicherer Sitz des Fußteiles 1 sowie des Kopfteiles 7 in dem Dachkanal 44 gewährleistet, da der Anlagevorsprung 3 einen in Richtung der Kanalseitenwand 40 rückgebogenen und einen Hinterschnitt bildenden Bereich des Halterandes 37 hintergreift.

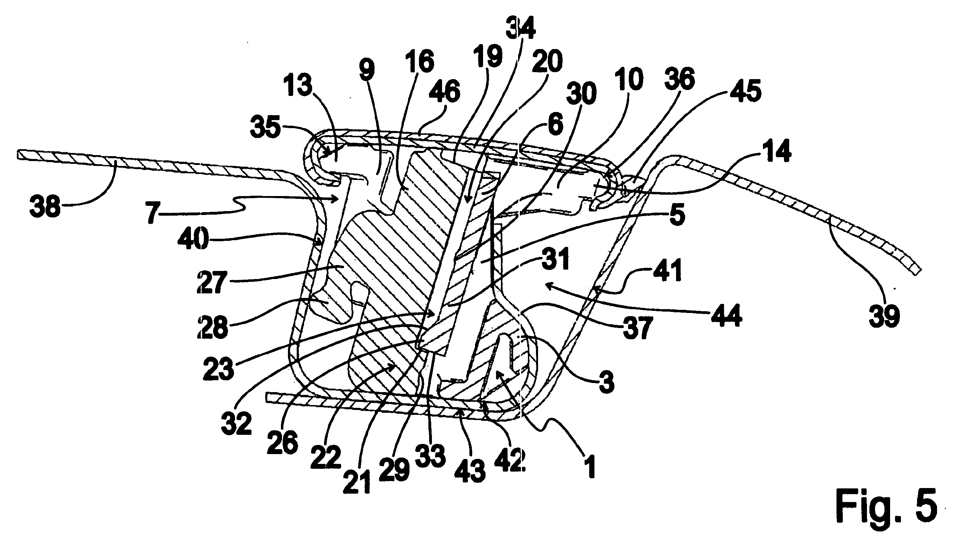

Fig. 5 zeigt die Anordnung gemäß Fig. 3 und Fig. 4 mit dem Fußteil 1 und dem Kopfteil 7 in einer Endmontagestellung, in der die jeweiligen zweiten Abstände zwischen dem Anlagevorsprung 3 sowie den Formnasen 12, 13, 14, 15 kleiner sind als die ersten Abstände in der Vormontagestellung und die an der Rastnase 26 ausgebildete Blockierfläche 33 die die Längsnut 20 begrenzende Anschlagfläche 21 hintergreift. In der Endmontagestellung ist die Dachleiste 34 unter Ausgleich von Toleranzen in den Abständen der Kanalseitenwände 40, 41 mit einem definierten Abstand von dem Fußteil 1 angeordnet und schließt den Dachkanal 44 auf der den Kanalbodenwänden 42, 43 gegenüberliegenden Seite ab. Aus Fig. 5 ist besonders gut erkennbar, dass aufgrund der Verformung der Andruckzunge 27 das kennbar, dass aufgrund der Verformung der Andruckzunge 27 das Fußteil 1 in einen innigen Kontakt mit dem Halterand 37 gebracht wird. Weiterhin lässt sich der Darstellung gemäß Fig. 5 entnehmen, dass aufgrund der Flexibilität der Spannarme 8, 9, 10, 11 nicht nur Toleranzen in dem Abstand zwischen den Randrinnen 35, 36 der Dachleiste 34 ausgleichbar sind, sondern dass dadurch die Dachleiste 34 insgesamt nach Art einer schwimmenden Lagerung bis zu einem gewissen Grad quer zu der Längsrichtung des Dachkanals 44 anpassbar ist, um einen leicht kurvenartigen Verlauf des Dachkanals 44 auszugleichen.

Um eine Abdichtung des Dachkanals 44 zu gewährleisten, verfügt die Dachleiste 34 wenigstens entlang einer Randrinne 35, 36 über eine in Richtung einer Kanalseitenwand 40, 41 vorstehende, flexible Dichtlippe 45, die Teil eines Überzugs 46 der Dachleiste 34 ist.

## Patentansprüche

1. Vorrichtung zum Halten einer Leiste in einem Kanal, insbesondere einer Dachleiste (34) in einem Dachkanal (44) eines Kraftfahrzeugs, mit einem Fußteil (1), das mit einer Haltestruktur (3) zum Verbinden mit einer an dem Kanal (44) ausgebildeten Eingriffsstruktur (37) eingerichtet ist, und mit einem Kopfteil (7), das mit Eingriffselementen (8 bis 11, 12 bis 15) zum Eingriff mit an der Leiste (34) ausgebildeten Randrinnen (35, 36) ausgestattet ist, **dadurch gekennzeichnet, dass** an dem Fußteil (1) sowie an dem Kopfteil (7) eine Schienenanordnung (19, 23) ausgebildet ist, mit der das Kopfteil (7) in Bezug auf das Fußteil (1) zwischen einer Vormontagestellung und einer Endmontagestellung geführt verschiebbar ist, wobei der Abstand zwischen der Haltestruktur (3) und den Eingriffselementen (8 bis 11, 12 bis 15) in der Vormontagestellung größer ist als in der Endmontagestellung, und dass an dem Kopfteil (7) sowie einem Fußteil (1) eine Verriegelungsanordnung (26, 33; 20, 21) ausgebildet ist, mit der in der Endmontagestellung das Kopfteil (7) in Bezug auf das Fußteil (1) wenigstens für eine Bewegung in die Vormontagestellung blockiert ist.

2. Vorrichtung nach Anspruch 1, **dadurch gekennzeichnet, dass** die Eingriffselemente eine Anzahl von seitlich über das Kopfteil (7) jeweils winklig voneinander weg laufende federnde Spannarme (8 bis 11) mit endseitig ausgebildeten Formnasen (12 bis 15) aufweisen.

3. Vorrichtung nach Anspruch 1 oder Anspruch 2, **dadurch gekennzeichnet, dass** die Haltestruktur einen Anlagevorsprung (3) aufweist.

4. Vorrichtung nach einem der Ansprüche 1 bis 3, **dadurch gekennzeichnet, dass** die Schienenanordnung eine an dem Fußteil (1) ausgebildete Führungsnut (23) und eine an dem Kopfteil (7) komplementär zu der Führungsnut (23) ausgebildete Innenschiene (19) aufweist.

5. Vorrichtung nach einem der Ansprüche 1 bis 4, **dadurch gekennzeichnet, dass** die Verriegelungsanordnung eine Rastnase (26) und einen Rastanschlag (22) aufweist, wobei die Rastnase (26) in der Endmontagestellung mit einer Blockierfläche (33) an einer Anschlagfläche (21) des Rastanschlags (22) anliegt.

6. Vorrichtung nach einem der Ansprüche 1 bis 5, **dadurch gekennzeichnet, dass** an dem Kopfteil (7) eine federnde, rechtwinklig zu der relativen Bewegungsrichtung des Fußteiles (1) sowie des Kopfteiles (7) und rechtwinklig zu Erstreckung der Leiste (34) wirkende Andruckzunge (27) ausgebildet ist.

## Claims

1. Device for retaining a strip in a channel, in particular a roof strip (34) in a roof channel (44) of a motor vehicle, comprising a base part (1) which is equipped with a retaining structure (3) for connection to an engagement structure (37) formed on the channel (44), and comprising a top part (7) which is equipped with engagement elements (8 to 11, 12 to 15) for engaging edge grooves (35, 36) formed on the strip (34), **characterized in that** a rail arrangement (19, 23) is formed on the base part (1) and on the top part (7), by means of which rail arrangement (19, 23) the top part (7) is displaceable relative to the base part (1), with guidance, between a preassembly position and a final assembly position, the distance between the retaining structure (3) and the engagement elements (8 to 11, 12 to 15) in the preassembly position being greater than in the final assembly position, and **in that** a locking arrangement (26, 33; 20, 21) is formed on the top part (7) and on a base part (1), by means of which locking arrangement (26, 33; 20,21), in the final assembly position, the top part (7) is blocked relative to the base part (1), at least for a movement to the preassembly position.

2. Device according to Claim 1, **characterized in that** the engagement elements have a number of springy clamping arms (8 to 11) running in each case at an angle away from one another and having shaped lugs (12 to 15) formed at one end.

3. Device according to Claim 1 or Claim 2, **characterized in that** the retaining structure has an abutment projection (3).

4. Device according to any of Claims 1 to 3, **characterized in that** the rail arrangement has a guide groove (23) formed on the base part (1) and an inner rail (19) formed on the top part (7), complementary to the guide groove (23).

5. Device according to any of Claims 1 to 4, **characterized in that** the locking arrangement has a detent (26) and a locking stop (22), the detent (26) resting, by means of a blocking surface (33), against a stop surface (21) of the locking stop (22) in the final assembly position.

6. Device according to any of Claims 1 to 5, **characterized in that** a springy pressure tongue (27) acting at right angles to the relative direction of movement of the base part (1) and of the top part (7) and at right angles to the length of the strip (34) is formed on the top part (7).

## Revendications

1. Dispositif de fixation d'une baguette en position dans une goulotte, notamment d'une baguette de pavillon (34) dans une goulotte de pavillon (44) d'un véhicule automobile, comprenant un pied d'ancrage (1), qui est muni d'une structure de retenue (3) destinée à être reliée à une structure de mise en prise d'encastrement (37) prévue dans la goulotte (44) et une partie formant tête (7) qui comporte des organes d'accrochage (8 à 11, 12 à 15) destinés à être amenés en prise d'encastrement avec des goulottes de rive (35, 36) ménagées dans la baguette (34), **caractérisé en ce que** le pied d'ancrage (1) ainsi que la partie formant tête (7) présentent un agencement formant glissière (19, 23), le long duquel la partie formant tête (7) peut être déplacée, par rapport au pied d'ancrage (1) entre une position de montage préalable et une position de montage finale, l'intervalle d'écartement entre la structure de retenue (3) et les organes d'accrochage (8 à 11, 12 à 15) étant en l'occurrence, dans la position de montage préalable, plus grand que dans la position de montage finale, et **en ce qu'**il est prévu sur la partie formant tête (7) ainsi que sur le pied d'ancrage (1) un dispositif de verrouillage (26, 33 ; 20, 21) qui, dans la position de montage finale, permet de bloquer en position la partie formant tête (7) par rapport au pied d'ancrage (1) pour au moins l'empêcher de se replacer dans la position de montage préalable.

2. Dispositif selon la revendication 1, **caractérisé en ce que** les organes d'accrochage comportent un certain nombre de segments élastiques de mise en tension (8 à 11) qui vont en s'écartant respectivement les uns des autres vers l'extérieur selon une disposition angulaire dans le plan latéral au-dessus de la partie formant tête (7), et qui sont munis, au niveau de leurs extrémités, d'ergots profilés (12 à 15).

3. Dispositif selon la revendication 1 ou la revendication 2, **caractérisé en ce que** la structure de retenue est munie d'un épaulement de butée.

4. Dispositif selon l'une des revendications 1 à 3, **caractérisé en ce que** l'agencement formant glissière se compose d'une rainure de guidage (23) ménagée dans la patte d'ancrage (1) et d'une glissière intérieure (19) ménagée dans la partie formant tête (7) agencée pour venir en correspondance d'accouplement avec la rainure de guidage (23).

5. Dispositif selon l'une des revendications 1 à 4, **caractérisé en ce que** le dispositif de verrouillage comporte un ergot de mise en prise d'encastrement (26) et une butée d'accrochage (22), l'ergot de mise en prise d'encastrement (26) étant en l'occurrence, dans la position de montage finale, en contact d'application, au niveau d'une face de blocage (33), contre une face de butée (21) de la butée d'accrochage (22).

6. Dispositif selon l'une des revendications 1 à 5, **caractérisé en ce que** la partie formant tête (7) est munie d'une languette élastique de poussée en position d'application (27), dont l'action s'exerce perpendiculairement à la direction du déplacement relatif du pied d'ancrage (1) ainsi que de la partie formant tête (7) et perpendiculairement à l'extension de la baguette (34).
